# EUROPÄISCHE PATENTSCHRIFT

(11) **EP 0 410 216 B1**
(45) Veröffentlichungstag und Bekanntmachung des Hinweises auf die Patenterteilung: **14.04.1993**
(21) Anmeldenummer: 90113321.5
(22) Anmeldetag: 12.07.1990
(51) Int. Cl.: B62D 55/24, B62D 55/205

(54) **Bändergleiskette für Kettenfahrzeuge und Schneemobile**
Band track chain for tracklaying vehicles and snowmobiles
Chenille à ruban pour véhicules à chenilles et véhicules à neige

(30) Priorität: 27.07.1989 DE 3924893
(43) Veröffentlichungstag der Anmeldung: 30.01.1991
(73) Patentinhaber: DIEHL GMBH & CO., 90478 Nürnberg (DE)
(72) Erfinder: Wiesner, Hagen Heinz, D-5650 Solingen 25 (DE); Spies, Klaus, D-5630 Remscheid (DE); Oertgen, Ekkehard, D-5608 Radevormwald (DE)

(56) Entgegenhaltungen:
- EP-A- 0 176 675
- DE-A- 2 621 237
- DE-A- 2 706 891
- DE-A- 3 447 881
- DE-A- 3 731 618
- FR-A- 2 471 905
- US-A- 3 019 062
- US-A- 3 567 291

## Beschreibung

Die Erfindung bezieht sich auf auf eine bekannte Bändergleiskette für Kettenfahrzeuge und Schneemobile nach dem Oberbegriff des Anspruchs 1.

Aus der DE-A 2706891 ist eine Bandkette aus mehreren miteinander verbindbaren, flexibel ausgebildeten Gleisketteneinheiten bekannt. In einem Gummikörper sind in Laufrichtung einige Kordschnüre zusammen mit quer angeordneten Zugankern integriert. Zusätzlich liegt in dem Gummi ein umlaufendes Drahtseil. Der Gummikörper weist weiterhin Greifrippen und auswechselbar angeordnete Antriebsstangen mit Führungsbügeln sowie starre, also nicht gelenkige Verbindungsglieder zur Kupplung benachbarter Gleisketteneinheiten auf. Vorteilhaft ist an dieser Bandkette, daß beschädigte Teile schnell ausgewechselt werden können. Nachteilig daran ist jedoch das relativ hohe Gewicht einer Gleisketteneinheit und die starre Verbindung der Gleisketteneinheiten. Die starre Verbindung bewirkt aufgrund der nichtvorhandenen Flexibilität einen erhöhten Verschleiß der Laufstollen.

Ein biegsames Laufband für selbstfahrende Arbeitsmaschinen ist aus der DE-A 3731618 bekannt. Es besteht aus biegsamem elastischen Material wie Gummi und weist eine doppelte Metallbewehrung, eine längsverlaufende und eine querverlaufende auf. Die Verbindung der Enden des Bandes ist als Doppelscharnier gelenkig ausgebildet. Nachteilig daran ist, daß partiell entstehender Schaden an dem Laufband nur durch Auswechseln des gesamten Laufbandes zu beseitigen ist.

Bei einer weiteren Gummibandkette für Fahrzeuge nach der DE-A 2621237 liegt eine Verbindung der Kettenenden in der Form eines Scharnieres vor. Die Scharnierglieder weisen gegeneinander versetzte, durch einen Bolzen miteinander gelenkig verbindbare Rohrabschnitte und querliegende Zuganker zur Befestigung der Stahlseile auf. Die Zuganker sind mit den Rohrabschnitten über Laschen verbunden. Das relativ hohe Gewicht der Gummibandkette resultiert aus der mäanderförmigen Anordnung der Seile, wobei die Seile abwechselnd um, in der Bandkette ebenfalls integrierte Rohre und Stäbe geschlungen sind. Ein weiterer Nachteil besteht darin, daß partiell entstehender Schaden an der Gummibandkette nur durch Austausch der kompletten Gummibandkette beseitigt werden kann.

Der Erfindung liegt die Aufgabe zugrunde, eine gattungsgemäße Bändergleiskette mit austauschbaren, besonders in Laufrichtung zugfesten Bandsegmenten bei geringem Gewicht zu schaffen.

Die Erfindung löst diese Aufgabe entsprechend den kennzeichnenden Merkmalen des Anspruches 1.

Vorteilhafte Weiterbildungen der Erfindung sind den Unteransprüchen zu entnehmen.

Entsprechend dem Anspruch 1 liegt ein zugfestes Bandsegment mit geringem Gewicht und ausreichender Quersteifigkeit aufgrund der im Gummi integrierten endlosen, hochfesten Gewebebändern vor, die die Zuganker der Scharnierglieder umschlingen. Die Gewebebänder bilden die Trägerkörper, die eine hohe Zugkraft mit geringer Dehnung übertragen. Die Umschlingung der Bänder an dem als Quertraverse ausgebildeten Bolzen liegt im statischen, also ruhigen Bereich des Bandsegmentes.

Nach dem Anspruch 2 liegt zwischen dem Bolzen und der Traverse ein sehr kurzer Biegebereich mit großem Widerstandsmoment. Dadurch ist die Beanspruchung der Gewebebänder in diesem kritischen Bereich sehr gering.

Ein Verschleiß des Gewebebandes im Umschlingungsbereich durch Relativbewegungen liegt daher nicht vor.

Definierte Schwenkzonen des Scharniergliedes sind durch den Anspruch 3 bestimmt. Daher können die besonders beanspruchten Flächen gezielt verschleißfest ausgebildet sein.

Nach dem Anspruch 4 liegt durch die an dem Scharnierglied seitlich angeordneten Laschen eine gute Quersteifigkeit der Bändergleiskette vor.

Eine geeignete Ausbildung der Scharnierglieder nach Anspruch 5 ist bei relativ breiten Bändergleisketten gegeben.

Nach dem Anspruch 6 ist die freie und ungedämpfte Verdrehbarkeit der Scharnierglieder gewährleistet. Auch liegt im Gegensatz zu der DE-A 2621237 eine gute seitliche Führung der Scharnierglieder im Scharnierbereich vor. Bei der DE-A 2621237 sind auf dem Kettenbolzen seitlich zu den metallischen Scharniergliedern Gummibuchsen vorgesehen. Diese erlauben einen gewissen seitlichen Versatz. Der seitliche Versatz kann zu einem verstärkten Verschleiß an den Bolzen durch Verkanten der metallischen Scharnieraugen in Bezug auf die Achse des Verbindungsbolzen und zum vorzeitigen Verschluß der Gummibuchsen führen. Nach der Erfindung liegen die Scharnieraugen zur Hälfte im Bereich der Gummistollen in Gummi eingebettet, wobei die Arme vollständig in Gummi eingebettet sind, so daß im Bandsegment das Scharniergelenk im Gummi steif gelagert ist. Dem gegenüber liegt zwischen zwei Gummistollen eine große Elastizität rechtwinklig zur Fahrtrichtung der Kette vor. Der steife Abschnitt des Bandsegmentes schützt die Gewebebänder im Umschlingungsbereich.

Der Anspruch 7 bewirkt die Klemmung der Gewebebänder an den Scharniergliedern durch fertigungsseitig vorgesehene Zugbeanspruchung mittels Recken der Gewebebänder mit anschließendem Fixieren der gereckten Gewebebänder durch Vulkanisieren des Grundkörpers. Im Fahrbetrieb der Kette ist daher der Umschlingungsbereich der Gewebebänder an den Bolzen von kritischen Spannungsspitzen entlastet.

Eine schnelle und kostengünstige Austauschbarkeit beschädigter Bandsegmente ist durch den Anspruch 8 gegeben.

Eine kostengünstige Herstellung eines Scharniergliedes, das auch den Bolzen für die Umschlingung durch die Gewebebänder umfaßt, liegt nach dem Anspruch 9 vor. Es eignet sich die Herstellung durch Schmieden, Gießen oder durch metallbewehrte Kunststoffe.

Beim Anspruch 10 ist vorteilhaft, daß der Bolzen des Scharniergliedes aus einem anderen Werkstoff bestehen kann als das Scharnierglied. Beispielsweise kann der Bolzen aus Kunststoff oder als Metallrohr ausgebildet sein, während das Scharnierglied aus Stahlguß besteht.

Ein Ausführungsbeispiel der Erfindung ist in der Zeichnung dargestellt. Es zeigt:
Fig. 1 einen Abschnitt einer Bändergleiskette
Fig. 2 einen Schnitt II-II der Bändergleiskette nach Fig. 1
Fig. 3 einen Abschnitt III nach Fig. 1
Fig. 4 eine andere Bändergleiskette im Längsschnitt
Fig. 5 und 6 Scharnierglieder einer Bändergleiskette.

Eine Bändergleiskette 1 besteht aus Bandsegmenten 15. Jedes Bandsegment 15 weist einen Grundkörper 2 aus Gummi auf. Im Grundkörper 2 sind einvulkanisiert Scharnierglieder 3,4, hochfeste Gewebebänder 5 aus endlos gewebten Bändern, Bolzen 6 und sich über die nahezu gesamte Breite der Bändergleiskette erstreckende Laschen 7 vorgesehen.

Die Scharnierglieder 3,4 sind mit seitlichen und mittigen Armen 8,9 versehen. Weiterhin weisen die Scharnierglieder 3,4 Rohrabschnitte 10, 11 auf. Ein Kettenbolzen 12 ist in dem Scharnierglied 3 durch Stifte 13 arretiert.

Die Länge 20 der Arme 8, 9 entspricht etwa 1/3 der Kettenteilung 21. Ein Abstand 14 ist zwischen dem Bolzen 6 und der Traverse 7 vorgesehen. Der elastische Bereich des Grundkörpers liegt in der Ebene 22 zwischen zwei Gummistollen 23.

Mit den fahrbahnseitigen Laschen 7 sind über Schraubverbindungen 30 auf Platten 31 angeordnete Führungszähne 32 verbunden. Die fahrbahnseitigen Gummistollen 23 weisen Bohrungen 24 auf.

Für den laufradseitigen Zahneingriff von nichtdargestellten Antriebsrädern sind im Grundkörper Durchbrüche 25 vorgesehen. Die Laufrichtung der Bändergleiskette ist mit 27 bezeichnet.

Die Gewebebänder 5 sind in der Lage, eine hohe Zugkraft mit geringer Dehnung zu übertragen. Durch den Eingriff der Antriebsräder in den Durchbrüchen 25 wird der Kraftfluß zunächst auf den gesamten Querschnitt der Bändergleiskette 1 übertragen und dann durch die Gewebebänder 5 und die Scharnierglieder 3, 4 auf die gesamte Länge der Bändergleiskette 1 verteilt.

Der für die Gewebebänder 5 kritische Biegebereich gemäß dem Abstand 14 - hervorgerufen durch die Antriebsräder und durch die Laufrollen - ist sehr kurz. Das große Widerstandsmoment in dem genannten Biegebereich gewährleistet eine lange Standzeit der Gewebebänder 5.

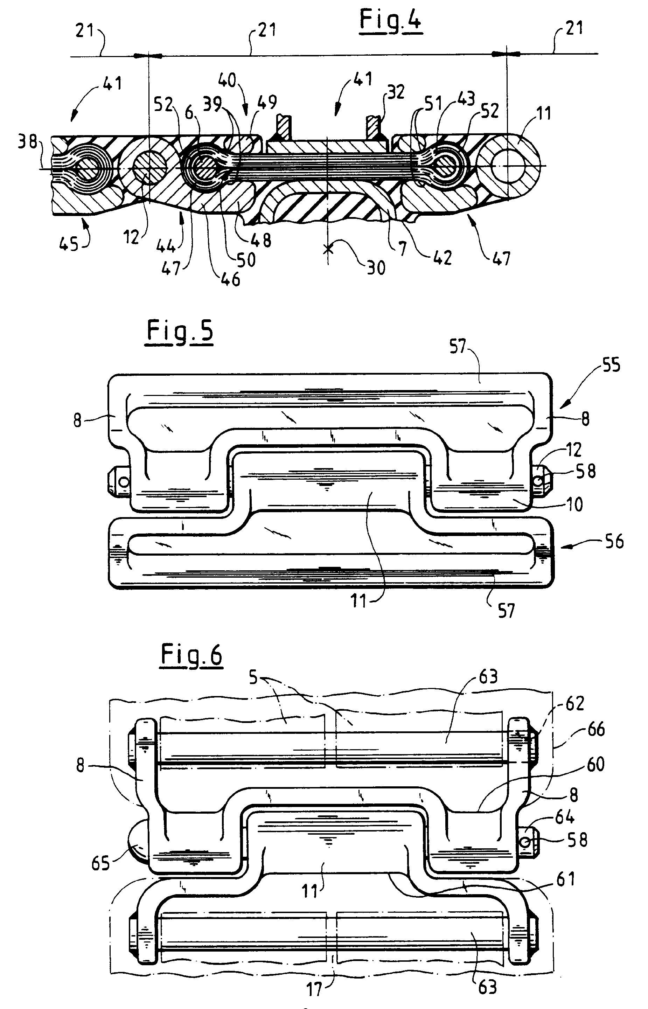

Nach Figur 4 besteht eine Bändergleiskette 14 entsprechend der Kettenteilung 21 aus Bandsegmenten 41. Jedes Bandsegment 41 besitzt einen Grundkörper 42 aus Gummi, zwei Scharnierglieder 44, 45 und mehrere Gewebebänder 43.

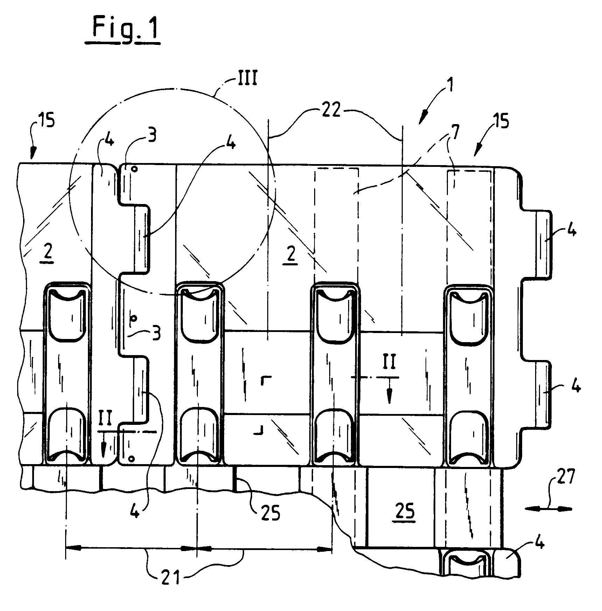

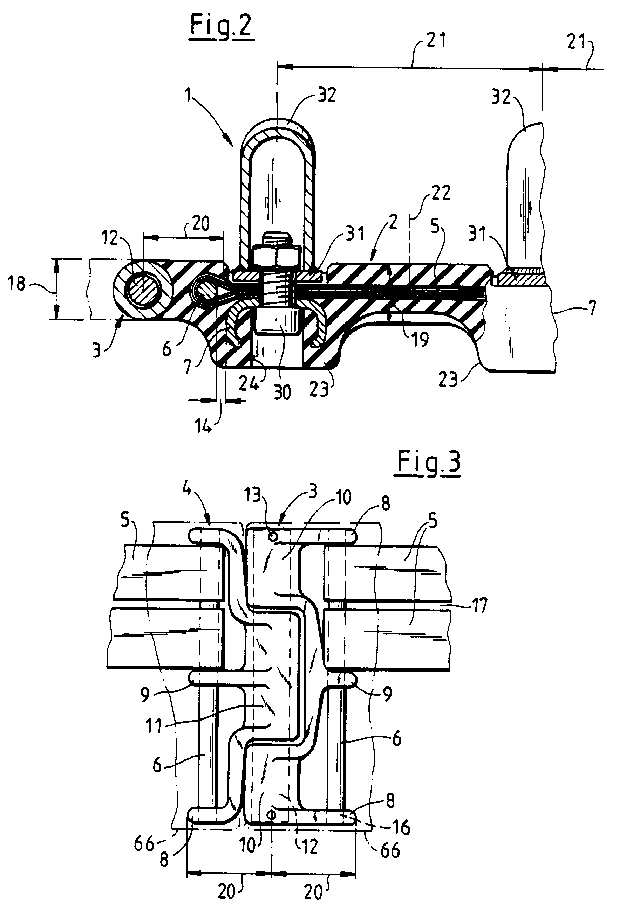

Abweichend zur Bändergleiskette 1 nach den Figuren 1 bis 3 sind die Scharnierglieder 44, 45 für die endlosen Gewebebänder 43 mit einer selbstklemmenden Halterung versehen. Jedes Scharnierglied 44, 45 besitzt Arme 46 mit einer Ausnehmung 47 in der Höhe des Bolzen 6, einen unteren Stützkörper 48 und einen oberen Stützkörper 49 im Abstand der doppelten Dicke des Gewebebandes 43. Ein dadurch gebildeter Schlitz 50 liegt in der Ebene 38 der Bolzen 6, 12. Der obere Stützkörper 49 ist in nicht gezeichneter Weise mit dem Scharnierglied 44, 45 über die Arme 46 verbunden. An den Stützkörpern 48, 49 sind gerundete Flächen 39 vorgesehen. Vor Vulkanisation des Grundkörpers 42 wird das die Bolzen 6 umschlingende Gewebeband 43 im elastischen Bereich auf die Kettenteilung 21 gereckt. Dann erst erfolgt die Vulkanisation des Grundkörpers 42. Durch das Recken nimmt die Dicke des Gewebebandes 43 auch im Schlitz 50 etwas ab. Bei der Vulkanisation dringt Gummi auch in die Spalte 51 ein und fixiert das Gewebeband 43 im Schlitz 50. Die Gewebebänder sind daher im Umschlingungsbereich 52 mit einer Vorspannung fixiert, so daß im Fahrbetrieb der Bändergleiskette 40 die Gewebebänder 43 entlastet sind und eine lange Standzeit besitzen.

Nach Figur 5 liegen gegossene Scharnierglieder 55, 56 mit angegossenen Bolzen 57 vor. Der Kettenbolzen 12 weist Bohrungen 58 für nichtgezeichnete Splinte auf.

Aus Figur 6 sind ebenfalls gegossene Scharnierglieder 60, 61 jedoch mit, in Bohrungen 62 eingeschweißten Bolzen 63 ersichtlich. Ein Kettenbolzen 64 ist mit einem Kopf 65 und der für einen nicht gezeichneten Splint vorgesehenen Bohrung 58 versehen.

Die Gewebebänder 5 und die Außenkontur des aus Gummi bestehenden Grundkörpers 66 sind strichpunktiert gezeichnet.

## Patentansprüche

1. Bändergleiskette (1) für Kettenfahrzeuge und Schneemobile bestehend aus einzelnen, austauschbaren Bandsegmenten (15), wobei ein Bandsegment (15) einen Grundkörper (2) aus Gummi aufweist, der einvulkanisierte, zugbelastbare Einlagen (5) aufweist, die im Bereich der Verbindungsstellen (3,4) der Bandsegmente (15) einen quer im Gummi gelagerten Zuganker (6) umschlingen,
die als einvulkanisierte Scharnierglieder (3,4) ausgebildeten Verbindungsstellen Rohrabschnitte (10,11) mit eingesetzten Rohren oder Kettenbolzen (12) sowie im seitlichen Abstand voneinander angeordnete Arme (8,9) aufweisen, wobei die Arme (8,9) den als Verbindungsbolzen (6) ausgebildeten Zuganker halten,
dadurch gekennzeichnet,
daß die Einlagen aus wenigstens zwei endlosen, in einem Abstand (17) nebeneinander angeordneten Gewebebändern (5) bestehen, die Arme (8,9) nahe eines unelastischen Biegebereiches eines Gummi- bzw. Laufstollens (23) bzw. einer quersteifen Traverse (7) enden.

2. Bändergleiskette nach Anspruch 1,
dadurch gekennzeichnet,
daß das Verbindungsrohr oder der Verbindungsbolzen (6) nur in einem der beiden Scharnierglieder (3,4) drehsicher befestigt ist.

3. Bändergleiskette nach Anspruch 1,
dadurch gekennzeichnet,
daß die Scharnierglieder (3,4) seitlich angeordnete Arme (8) und einen mittigen Arm (9) aufweisen.

4. Bändergleiskette nach Anspruch 1,
dadurch gekennzeichnet,
daß die Höhe (18) der Scharnierglieder (3,4), nämlich deren Rohrabschnitte (10,11) etwa der Dicke (19) des Grundkörpers (2) entspricht.

5. Bändergleiskette nach Anspruch 1,
dadurch gekennzeichnet,
daß an dem gewebebandseitigen Teil der Scharnierglieder (44, 45) in einer Ebene (38) des Kettenbolzens (12) und des Verbindungsbolzens (6) ein Schlitz (50) für das zweilagige Gewebeband(43) besteht, wobei der Schlitz (50) durch einen unteren und oberen Stützkörper (48, 49) mit gerundeten Flächen (39) gebildet sind, und daß die Gewebebänder (43) in ihrem Umschlingungsbereich (52) am Verbindungsbolzen (6) in vorgespanntem Zustand durch Vulkanisation von Gummi in den Spalten (51) am Schlitz (50) fixiert sind.

6. Bändergleiskette nach Anspruch 7,
dadurch gekennzeichnet,
daß die Scharnierglieder (44, 45) im Abstand der Kettenteilung (21) ein Bandsegment (41) bilden.

7. Bändergleiskette nach Anspruch 1,
dadurch gekennzeichnet,
daß der Bolzen (57) mit dem Scharnierglied (55 bzw. 56) einstückig verbunden ist.

8. Bändergleiskette nach Anspruch 1,
dadurch gekennzeichnet,
daß der Bolzen (63) mit den Armen (8) der Scharnierglieder (55, 56) verschweißt ist.

## Claims

1. A belt caterpillar track (1) for tracked vehicles and snowmobiles consisting of individual, exchangeable belt segments (15), in which respect a belt segment (15) has a base body (2) made of rubber which has vulcanised-in, tension-loadable inserts (5), which in the region of the connection points (3,4) of the belt segments (15) loop around a tension anchor (6) mounted transversely in the rubber, the connection points designed as vulcanised-in hinge members (3,4) have tube portions (10,11) with inserted tubes or track pins (12) as well as arms (8,9) arranged at a lateral spacing from one another, in which respect the arms (8,9) hold the tension anchor designed as a connecting pin (6), characterised in that the inserts consist of at least two endless fabric belts (5) arranged side-by-side at a spacing (17), the arms (8,9) ending close to a non-elastic bending region of a rubber or respectively running block (23) or respectively of a transversely stiff traverse (7).

2. A belt caterpillar track according to Claim 1, characterised in that the connecting tube or the connecting pin (6) is fastened in a torsionally-secure manner only in one of the two hinge members (3,4).

3. A belt caterpillar track according to Claim 1, characterised in that the hinge members (3,4) have laterally arranged arms (8) and a central arm (9).

4. A belt caterpillar track according to Claim 1, characterised in that the height (18) of the hinge members (3,4), namely the tube portions (10,11) thereof, corresponds approximately to the thickness (19) of the base body (2).

5. A belt caterpillar track according to Claim 1, characterised in that on the fabric-belt-sided part of the hinge members (44,45) in a plane (38) of the track pin (12) and of the connecting pin (6) a slot (50) exists for the two-ply fabric belt (43), the slot (50) being formed by a lower and an upper supporting body (48,49) having rounded surfaces (39), and in that the fabric belts (43) in their looping-around region (52) at the connecting pin (6) are fixed in the prestressed state by vulcanisation of rubber in the gaps (51) at the slot (50).

6. A belt caterpillar track according to Claim 7, characterised in that the hinge members (44,45) at the spacing of the track pitch (21) form a belt segment (41).

7. A belt caterpillar track according to Claim 1, characterised in that the pin (57) is connected in one piece to the hinge member (55 or 56 respectively).

8. A belt caterpillar track according to Claim 1, characterised in that the pin (63) is welded to the arms (8) of the hinge members (55,56).

## Revendications

1. Chenille à ruban (1), pour véhicules chenillés et véhicules de neige, composée de segments de rubans individuels (15) interchangeables, un segment de ruban (15) présentant un corps de base (2) en caoutchouc comportant des garnitures (5) vulcanisées, pouvant de travailler en traction, enlaçant, dans la zone des points de liaison (3,4) des segments de ruban (15), une tige de traction (6) montée transversalement dans le caoutchouc, les points de liaison, réalisés sous forme d'éléments de charnières (3,4) vulcanisées, présentant des sections tubulaires (10,11) à tubes ou boulons de chaîne (12) intégrés, ainsi que des bras (8,9) disposés à distance latérale les uns des autres, les bras (8,9) maintenant la tige de traction réalisée sous forme de boulon de liaison (6), caractérisée en ce que les garnitures sont composées d'au moins deux rubans tissés (5) continus, disposés les uns à côté des autres, espacés d'une distance (17), les bras (8,9) s'achevant près d'une zone de flexion non élastique d'un crampon en caoutchouc ou crampon de roulement (23), ou d'une traverse rigide transversalement (7).

2. Chenille à ruban selon la revendication 1, caractérisée en ce que le tube de liaison ou le boulon de liaison (6) n'est fixé en rotation que dans l'une des deux éléments de charnière (3,4).

3. Chenille à ruban selon la revendication 1, caractérisée en ce que les éléments de charnière (3,4) présentant des bras (8) disposés latéralement et un bras central (9).

4. Chenille à ruban selon la revendication 1, caractérisée en ce que la hauteur des éléments de charnière (3,4), à savoir de leurs sections tubulaires (10,11) correspond à peu près à l'épaisseur (19) du corps de base (2).

5. Chenille à ruban selon la revendication 1, caractérisée en ce que, sur la partie côté textile des éléments de charnière (44,45), dans un plan (38) du boulon de chaîne (12) et du boulon de liaison (6), est prévu une fente (50) pour le ruban textile (43) à deux couches, la fente (50) étant formée au moyen d'un corps d'appui inférieur et d'un corps d'appui supérieur (48,49), à surfaces (39) arrondies, et en ce que les rubans textile (43) sont fixés sur la fente (50), dans leur zone d'enlacement (52), sur le boulon de liaison (6), à l'état précontraint, par vulcanisation du caoutchouc dans les interstices (42).

6. Chenille à ruban selon la revendication 7, caractérisée en ce que les éléments de charnière (3,4) forment un segment de ruban (41), à distance de la division de chaîne (12).

7. Chenille à ruban selon la revendication 1, caractérisée en ce que le boulon (57) est relié d'un seul tenant à l'élément de charnière (55, ou 56).

8. Chenille à ruban selon la revendication 1, caractérisée en ce que le boulon (63) est soudé aux bras (8) des éléments de charnière (55, ou 56)
